(19) Europäisches Patentamt
European Patent Office
Office européen des brevets

(11) **EP 3 209 062 B1**

(12) **EUROPEAN PATENT SPECIFICATION**

(45) Date of publication and mention
of the grant of the patent:
**19.09.2018 Bulletin 2018/38**

(51) Int Cl.:
***H04W 36/32*** *(2009.01)*      *G01S 5/02* *(2010.01)*
***H04W 36/00*** *(2009.01)*      *H04W 84/12* *(2009.01)*
***H04W 64/00*** *(2009.01)*

(21) Application number: **16156298.8**

(22) Date of filing: **18.02.2016**

(54) **TRIGGERING A WIRELESS ACCESS POINT HANDOVER**

AUSLÖSUNG EINER DRAHTLOSZUGANGSPUNKT-ÜBERGABE

DÉCLENCHER UN TRANSFERT DE POINTS D'ACCÈS SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.08.2017 Bulletin 2017/34**

(73) Proprietor: **Huawei Technologies Co., Ltd.
Longgang District
Shenzhen, Guangdong 518129 (CN)**

(72) Inventors:
• **REZNIC, Zvi**
 **80992 Munich (DE)**
• **EZRI, Doron**
 **80992 Munich (DE)**
• **WEITZMAN, Avi**
 **80992 Munich (DE)**
• **KLAUSNER, Ohad**
 **80992 Munich (DE)**
• **WANG, Yungui**
 **80992 Munich (DE)**
• **JIANG, Xingfeng**
 **80992 Munich (DE)**
• **RUAN, Wei**
 **80992 Munich (DE)**

(74) Representative: **Körber, Martin Hans et al
Mitscherlich PartmbB
Patent- und Rechtsanwälte
Sonnenstraße 33
DE-80331 München (DE)**

(56) References cited:
**EP-A1- 2 804 414      WO-A1-2010/090558**

• **IVAN ALDAYA ET AL: "Real-time traffic, handoff,
and outage modeling in high RF pico cells", 2011
IEEE WIRELESS COMMUNICATIONS AND
NETWORKING CONFERENCE (WCNC 2011) :
CANCUN, MEXICO, 28 - 31 MARCH 2011, IEEE,
PISCATAWAY, NJ, 28 March 2011 (2011-03-28),
pages 410-415, XP031876288, DOI:
10.1109/WCNC.2011.5779168 ISBN:
978-1-61284-255-4**
• **MOHAMMED A BEN-MUBARAK ET AL:
"Movement direction-based handover scanning
for mobile WiMAX", COMMUNICATIONS (APCC),
2011 17TH ASIA-PACIFIC CONFERENCE ON,
IEEE, 2 October 2011 (2011-10-02), pages
737-742, XP032116054, DOI:
10.1109/APCC.2011.6152904 ISBN:
978-1-4577-0389-8**

**Description**

BACKGROUND

The present invention, in some embodiments thereof, relates to wireless networking and, more specifically, but not exclusively, to management of changing access points used by a mobile device accessing a wireless network.

Mobile devices communicate wirelessly with Access Points (AP) that provide connectivity to a network. Each AP is limited to providing communication services to mobile devices located in a certain geographical area. Mobile devices moving from one geographical location to another geographical location may need to switch from using one AP to another AP. The process of changing APs may also be termed BSS transition, or Handover.

WO 2010/090558 A1 discloses a UE tracking system (e.g. car traffic control - traffic jam forecast - along a highway). HO events are continuously captured and stored together with associated time stamps in a traffic server, thereby identifying typical cell switching points CSP. EP 2 804 414 A1 relates to a method, a base station, and a terminal for obtaining a moving speed of a mobile terminal. A moving speed of a mobile terminal is obtained by obtaining a distance estimation parameter and using the distance estimation parameter, or a moving speed of a mobile terminal is obtained according to information reported by the mobile terminal, or a moving speed of a mobile terminal is received from another base station, so as to enable a base station to learn the moving speed of the mobile terminal and therefore avoid the problem of call drop caused by slow handover because of a fast moving speed of a mobile terminal.

IVAN ALDAYA ET AL: "Real-time traffic, handoff, and outage modeling in high RF pico cells", 2011 IEEE WIRELESS COMMUNICATIONS AND NETWORKING CONFERENCE (WCNC 2011), CANCUN, MEXICO, 28 - 31 MARCH 2011, published by IEEE, PISCATAWAY, NJ, (20110328), DOI: 10.1109/WCNC.2011.5779168, ISBN 978-1-61284-255-4, pages 410 - 415, discloses a 2D Markov-Chain analysis to model channel occupancy within a high mobility picocell based network including handover and outage events. Single-cell performance is evaluated by the Grade of Service and by the call dropping probability. The relations between different picocellular network parameters are analyzed and guidelines for proper MAC protocol design are given.

It is noticed, however, that prior art lacks the disclosure of an effective way to determine an accurate handoff timing for mobile devices roaming from one AP to another.

SUMMARY

It is an object of the present invention to provide an apparatus, a system, a computer program product, and a method for managing access point connections.

The foregoing and other objects are achieved by the features of the independent claims. Further implementation forms are apparent from the dependent claims, the description and the figures.

According to a first aspect, a device for managing access point connections is configured to: determine signal reception data related to a mobile device registered to one or more access points (AP), whereby said signal reception data is a received Signal Strength Indicator, RSSI, identified by one of said plurality of APs and related to said mobile device; access an access point mapping dataset indicative of geographical distances between the APs, calculate a crossover time in which the mobile device crosses over one of the APs by analyzing the signal reception data, wherein a direction indicator, DI, is calculated based on a difference between signal reception data from a first (310A) and a second (310B) group of directional antennas of the one of said plurality of APs, wherein the directional antennas of said first group and the directional antennas of said second group are facing opposite directions; and wherein the crossover time is determined by the time, at which the DI changes sign, which is indicative for the mobile device moving from facing towards the first set of antennas to facing away from the second set of antennas; estimate a velocity of the mobile device as a function of the signal reception data, in particular based on a difference between a past crossover time and a current crossover time and a first geographical distance between a previous and a current of the APs from the access point mapping dataset; and determine a handover time from a current of the APs to a following of the APs based on the current crossover time the velocity of the mobile device and a second geographical distance to an overlap region from the access point mapping dataset.

The device, system and/or method described herein allow for the handover to occur when the mobile device is located within overlapping coverage area, which may be a relatively small range of time (e.g., 1-10 seconds) when the mobile device is moving quickly and/or when the coverage range provided by each AP is relatively small. The handover may occur when the client is not aware of wireless parameters values at the next AP (e.g., frequency, cell size, cell location, location of client within the cell, location and/or size of the overlapping area) and would otherwise be unable to perform the handoff during the limited time spent in the overlapping area, resulting in a gap in coverage.

The device, system, and/or method described herein improve data throughout, bandwidth, and/or utilization of the available wireless channel by allowing different APs to use different channels while providing fast moving mobile devices with handoffs without disconnection of wireless services, which improves channel utilization by reducing or preventing unused channels. The handover time is calculated at the AP side without necessarily providing special instructions to the mobile device, for example, the mobile device is not instructed to switch to a different frequency of the next AP, then switch back to the original frequency of the current AP and report the RSSI measured in the other channel for processing by the AP, for example, as defined by the 802.11k protocol.

The device, system, and/or method described herein perform the processing to determine the handover time at the AP side, without necessarily requiring the mobile device to support a special protocol or perform special functions (e.g., to collect data and/or transmit data) to assist the AP with determining the handover time, providing support to a wide range of different mobile device implementing different wireless communication protocols.

In a first possible implementation form of the first device according to the first aspect as such, the APs are geographically distributed along at least one road.

In a second possible implementation form of the first device according to the first aspect as such or according to any of the preceding implementation forms of the first aspect, the device is further configured to receive a past handover time during which a service given to the mobile device by one of the APs was exchanged by a similar service given to the mobile device by another of the APs, wherein the velocity is estimated based on a difference between the past handover time and the crossover time.

The velocity is assumed to be approximately constant (i.e., the velocity does not vary significantly enough to affect the estimation of the handover time, for example, within a tolerance requirement).

In a third possible implementation form of the first device according to the first aspect as such or according to any of the preceding implementation forms of the first aspect, the velocity is estimated based on a weighted function that takes into account a past velocity of the mobile device and an average velocity calculated for mobile devices moving in a road passing between a first of the APs which currently gives service to the mobile device and a second of the APs which designated to give service to the mobile device instead of the first AP.

The weighted average function and/or the average velocity calculated for other mobile devices may be used in cases where the velocity of the mobile device varies, for example, due to traffic (or other reasons). The weighted average function and/or average velocity calculate for other mobile devices may improve the accuracy of estimating when the mobile device will reach the handover point, such as when the velocity before and after the crossover point are significantly different (i.e., that assuming a constant velocity will result in an error large enough that the determined handover point will result in a gap in wireless service).

In a forth possible implementation form of the first device according to the preceding implementation form of the first aspect, the velocity is estimated is calculated based on the time taken to the mobile device to pass a known distance between a third AP and the first AP.

In an fifth possible implementation form of the first device according to the first aspect as such or according to any of the preceding implementation forms of the first aspect, the handover time is a future handover time during which a service given to the mobile device by one of the APs is exchanged by a similar service given to the mobile device by another of the APs.

Handing service over at the determined handover time maintains continuity of the wireless service to the moving mobile device, without data transfer gaps or disruptions.

In a sixth possible implementation form of the first device according to the first aspect as such or according to any of the preceding implementation forms of the first aspect, the APs provide service for mobile clients by wireless signals having frequencies clustered around 2.4 gigahertz (GHz) and/or 5 GHz.

The device, system, and/or method described herein maintains continuity of communication service for mobile devices serviced by APs with relatively small coverage areas (e.g., less than 1 kilometer), and/or APs with relatively small overlap areas.

In a seventh possible implementation form of the first device according to the first aspect as such or according to any of the preceding implementation forms of the first aspect, the APs provide a Wi-Fi based service to the mobile device.

The device, system, and/or method described herein provide faster handoff as compared to other methods based on other wireless communication data transfer protocols (e.g., 802.11r), that maintains wireless connectivity for fast moving mobile devices, for example, located within cars travelling on highways (e.g., about 100 kilometers per hour, or about 80 km/h, or about 120 km/h, or other speeds).

In an eighth possible implementation form of the first device according to the first aspect as such or according to any of the preceding implementation forms of the first aspect, the handover time is determined to occur during an overlap region in which service provided by the one of the APs and the another of the APs overlap, and wherein the mobile device is estimated to remain within the overlap region for less than about one second.

The device, system, and/or method described herein maintains continuity of communication service for mobile devices moving quickly relative to APs (e.g., located within a car on a highway, or a train).

In an ninth possible implementation form of the first device according to the first aspect as such or according to any of the preceding implementation forms of the first aspect, the geographical distance between any two of the APs is less than 1000 meters.

The device, system, and/or method described herein maintains continuity of communication service for mobile devices serviced by APs with relatively small coverage areas (e.g., less than 1 kilometer), and/or APs with relatively small overlap areas.

According to a second aspect, a method for managing access point connections comprises determining signal reception data related to a mobile device registered to one or more APs, whereby said signal reception data is a received Signal Strength Indicator, RSSI, identified by one of said plurality of APs and related to said mobile device, accessing an access point mapping dataset indicative of geographical distances between the APs, calculating a crossover time in which the mobile device crosses over one of the APs by analyzing the signal reception data wherein a direction indicator, DI, is calculated based on a difference between signal reception data from a first and a second group of directional antennas of the one of said plurality of APs, wherein the directional antennas of said first group and the directional antennas of said second group are facing opposite directions; and wherein the crossover time is determined by the time, at which the DI changes sign, which is indicative for the mobile device moving from facing towards the first set of antennas to facing away from the second set of antennas, estimating a velocity of the mobile device as a function of the signal reception data, in particular based on a difference between a past crossover time and a current crossover time and a first geographical distance between a respective previous and current of the APs from the access point mapping dataset, and determining a handover time from a current of the APs to a following of the APs based on the current crossover time the velocity of the mobile device and a second geographical distance to an overlap region from the access point mapping dataset.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

FIG. 1 is a method for managing AP connections for a moving mobile device by determining a handover time from one of the APs to another of the APs, in accordance with some embodiments of the present invention;

FIG. 2 is a diagram of components of a system that allows a moving mobile device to maintain communication connectivity with a network by determining handover time(s) from one AP to another AP, in accordance with some embodiments of the present invention;

FIG. 3 is a schematic depicting an environment in which the device, system, and/or method described herein may be practiced, in accordance with some embodiments of the present invention;

FIG. 4 is a schematic diagram including graphs representing values used in calculating the directional indication, in accordance with some embodiments of the present invention; and

FIG. 5 is a schematic depicting a mobile device in the process of being handed between a previous AP and a current, in accordance with some embodiments of the present invention.

DETAILED DESCRIPTION

The present invention, in some embodiments thereof, relates to wireless networking and, more specifically, but not exclusively, to management of changing access points used by a mobile device accessing a wireless network.

An aspect of some embodiments of the present invention relates to a device (e.g., processing unit), system and/or method (e.g., implemented by code instructions stored in a memory executed by a processor) that determines a handover time for a moving mobile device (e.g., a Smartphone in a car driving on a road) from one access point (AP) to another AP. The handover time is calculated based on a determined crossover time (when the mobile device crosses over one of the APs), an estimated velocity of the mobile device, and a geographical distance defined relative to one or more of the APs. The device, system, and/or method described herein maintains continuity of wireless communication service for mobile devices moving quickly relative to APs (e.g., when the mobile device is located within a car driving on a highway), for mobile devices communicating with APs having a relatively small coverage areas (e.g., less than 1 kilometer), and/or APs with relatively small overlapping service areas. Continuity of service may be maintained for applications that cannot tolerate gaps in service, for example, voice over internet protocol (VoIP) calls.

Optionally, the crossover time is determined based on an analysis of signal data (e.g., packets transmitted by the mobile device) received by the AP, optionally measured based on a received Signal Strength Indicator (RSSI). Optionally, a direction indicator is calculated based on the difference between signal readings from a first group of directional antennas and a second group of directional antennas. The first and second group of directional antennas are associated with the same AP, facing in opposite directions, one group facing towards the moving mobile device and another group facing away from the mobile device. When the direction indicator changes sign (e.g., from positive to negative, or from negative to positive), and/or when the value of the directional indicator is about zero, the direction indicator represents the time at which the mobile device is crossing over the AP.

The handover time may be selected to correspond to overlapping coverage areas between neighboring APs (i.e., the two APs involved in the handover) such that the handover occurs within the overlapping area. The device, system and/or method described herein allow for the handover to occur when the mobile device is located within overlapping coverage area, which may be a relatively small range of time (e.g., 0.3-1 second, or 1-2 seconds) when the mobile device is moving quickly and/or when the coverage range provided by each AP is relatively small. The handover may occur when the client is not aware of wireless parameters values at the next AP (e.g., frequency, cell size, cell location, location of client within the cell, location and/or size of the overlapping area) and would otherwise be unable to perform the handoff during the limited time spent in the overlapping area, resulting in a gap in coverage.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

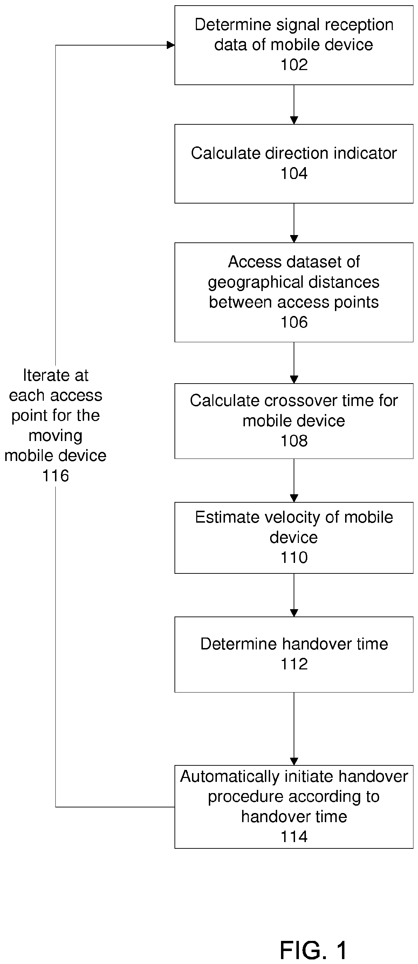

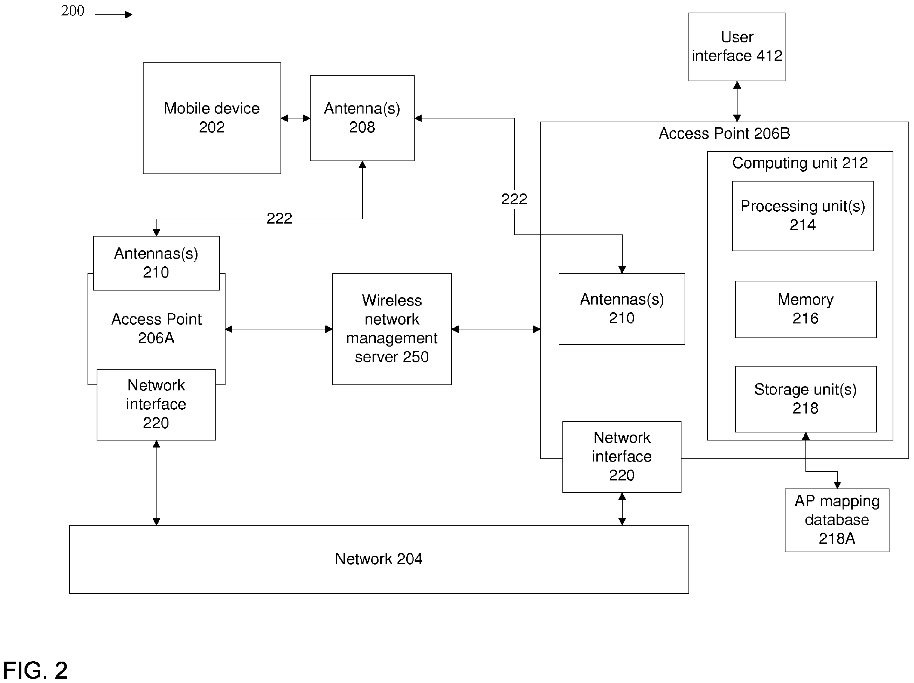

Reference is now made to FIG. 1 which is a flowchart of a method for managing AP connections for a moving mobile device by determining a handover time from one of the APs to another of the APs, in accordance with some embodiments of the present invention. Reference is also made to FIG. 2, which is a diagram of components of a system 200 that allows a moving mobile device 202 to maintain communication connectivity with a network 204 by determining handover time(s) from one AP 206A to another AP 206B, in accordance with some embodiments of the present invention.

The device, system, and/or method described herein provide faster handoff as compared to other methods based on other wireless communication data transfer protocols (e.g., 802.11r), that maintains wireless connectivity for fast moving mobile devices, for example, located within cars travelling on highways (e.g., about 100 kilometers per hour, or about 80 km/h, or about 120 km/h, or other speeds).

The device, system, and/or method described herein improve data throughout, bandwidth, and/or utilization of the available wireless channel by allowing different APs to use different channels while providing fast moving mobile devices with handoffs without disconnection of wireless services, which improves channel utilization by reducing or preventing unused channels. The handover time is calculated at the AP side without necessarily providing special instructions to the mobile device, for example, the mobile device is not instructed to switch to a different frequency of the next AP, then switch back to the original frequency of the current AP and report the RSSI measured in the other channel for processing by the AP, for example, as defined by the 802.11k protocol.

The device, system, and/or method described herein perform the processing to determine the handover time at the AP side, without necessarily requiring the mobile device to support a special protocol or perform special functions (e.g., to collect data and/or transmit data) to assist the AP with determining the handover time, providing support to a wide range of different mobile device implementing different wireless communication protocols. For example, the mobile device does not necessarily make its own handoff decisions, and/or does not necessarily measure RSSI to determine which AP to connect to (e.g., the AP with the highest RSSI), which reduces or prevents scenarios in which the mobile device connects to a less optimal AP, for example, when a truck is located in front of the mobile device hiding the next AP but not the current AP, the client may remain connected to the current AP even when a better scenario is to switch to the next AP (since the mobile device is moving and the blockage will end shortly).

System 200 allows end users using mobile device(s) 202 to connect to network 204 while moving, for example, travelling in a car (or bus or truck) on a highway (or other road), in a boat travelling within a canal or close to shore, or on a train or subway.

Each mobile device(s) 202 includes or is in communication with one or more antennas 208 that provide wireless connectivity 222 with one or more antennas 210 of APs 206A-B. Each AP 206A-B includes or is in communication with a network interface 220 that provides connectivity to network 204, providing mobile device(s) 202 with access to network 204. Exemplary network(s) 204 include: the internet, a cellular network, a local area network, a city network, and a private network.

Optionally, wireless connectivity 222 is based on a wireless computing technology designed for transfer of data (e.g., packets), optionally based on a Wi-Fi standard.

APs 206A-B are geographically distributed, optionally based on expected movement direction(s) of mobile device(s) 202, for example, along one or more roads. The geographically distribution, such as the distance between APs 206A-B may be based on the range of wireless transmission (e.g., based on the selected wireless protocols providing communication services 222). The geographical distance between any two APs may be, for example, about 200-500 meters, or about 500-1000 meters, or less than about 1000 meters, or about 1000-1500 meters, or about 1500-2000 meters, or other value ranges.

Antennas 210 are directional antennas arranged into at least two groups (each group include one or more antennas). Each antennas group is arranged to face towards moving mobile device 202, or away from moving mobile device 202. For example, when mobile device 202 is moving along a road, rail road, or canal, and APs 206A-B are installed along the side of the road, and directional antennas 210 are arranged to face towards mobile device 202, or away from mobile device 202. Optionally, the groups of directional antennas 210 are arranged opposite to one another. There may be, for example, 3 or 4 antennas 210 in each group, or 3 or 4 antennas 210 in total split between the two groups. Exemplary antenna values include a gain of at least about 27decibels relative to isotropic (dBi) at 2.4 Gigahertz (Ghz). AP 206A may provide service to mobile devices by wireless signals having frequencies clustered around 2.4 Ghz and/or 5 Ghz (optionally at both frequencies). AP 206A-B may be installed to provide support to cases in which mobile device 202 has a line of sight with antenna(s) 210 (e.g., the user sitting in the front seat of the car using a Smartphone to surface the internet) and/or when mobile device 202 does not have a line of sight with antenna(s) 210 (e.g., the user sitting in the back seat holding the Smartphone on the seat).

APs 206A-B may be installed, for example, within existing wireless and/or cellular base stations, on poles, on traffic lights, on highway lighting poles, on bridges, on buildings, on fences at the side of roads, or other locations. APs 206A-B may be installed to provide a line of sight with cars and/or moving mobile device(s) 202, for example, close to the road, above the road, and/or between lanes. APs 206A-B may be installed at a height of about 4-8 meters above the expected locations of mobile devices 202 (e.g., above the surface of the road). Each AP 206A-B may cover one direction of road travel. Two APs 206A-B covering two cells may be installed on the same pole (or other location), with one cell of one AP covering lanes closer to the AP having one direction of travel and another cell of the other AP covering lanes further away of traffic in the opposite direction.

Exemplary mobile devices 202 include: smartphone, laptop, tablet computer, wearable computing device, glasses computing device, and watch computing device.

Each AP 206A-B may include a computing unit 212 that includes a processing unit 214 and memory 216 for storing instruction code executable by processing unit 214. Computing unit 212 may be implemented, for example, as software installed on a base station computer, as a hardware card plugged into existing base station equipment, and/or as a stand-along unit in communication with base station equipment (e.g., using cables and/or a wireless connection).

Alternatively or additionally, computing unit 212 is implemented within a wireless network management server 250 in communication with AP 206A-B and/or other communication channel(s). Server 250 provides centralized control of the wireless network, by receiving data from APts 206A-B (e.g., RSSI and/or other signal reception data, as described herein), analyzing the received data (e.g., calculating the directional indicator, crossover time, and/or handover time, as described herein), and transmitting instructions to APs 206A-B (e.g., when to handover the mobile device). Server 250 may implement self organizing network (SON) code. Alternatively or additionally, management server 250 is implemented within one or more AP 206A-B. The AP hosting management server 250 may be designated as the AP group leader. APs 206A-B (and other APs not shown) may form one or more management groups and elect one of the APs per management group to perform the functions of managements server 250.

Processing unit 214 may be implemented, for example, as a central processing unit(s) (CPU), a graphics processing unit(s) (GPU), field programmable gate array(s) (FPGA), digital signal processor(s) (DSP), and application specific integrated circuit(s) (ASIC). Processing unit(s) 214 may include one or more processors (homogenous or heterogeneous), which may be arranged for parallel processing, as clusters and/or as one or more multi core processing units.

Memory 216 stores code instructions executed by processing unit 214, for example, a random access memory (RAM), read-only memory (ROM), and/or a storage device, for example, non-volatile memory, magnetic media, semiconductor memory devices, hard drive, removable storage, and optical media (e.g., DVD, CD-ROM).

Computing unit 212 includes a storage unit 218 that acts as a data repository for storing data, for example, a memory, a hard-drive, an optical disc, a storage unit, an interface to a remote storage server, and interface to a cloud server, and/or other storage units. Storage unit 218 may store an AP mapping dataset 218A, as described herein. Alternatively or additionally, AP mapping dataset 218A is stored on network management server 250. Alternatively or additionally, AP mapping dataset 218A is stored on a server accessible to multiple APs 206A-B and/or network management server 250, for example, a network connected server accessible via network 204.

It is noted that for clarity of explanation, one mobile device 202 is depicted. It is understood that multiple mobile devices 202 may be simultaneously communicating with APs 206A-B. The multiple mobile devices 202 may be travelling in different directions (e.g., opposite to one another, for example, differ directions on highway lanes). Moreover, it is understood that two APs 206A-B are shown for clarity of explanation, however system 200 may include a large number of APs.

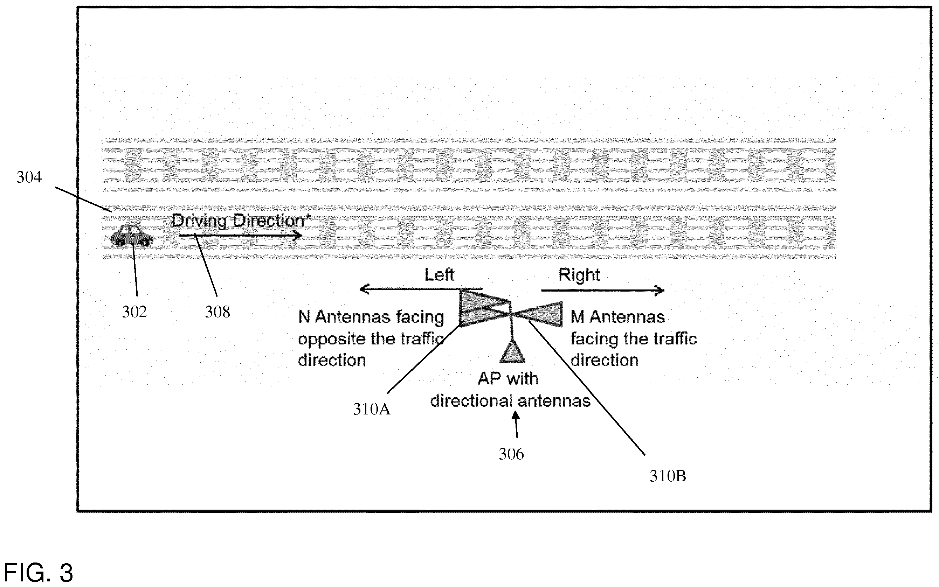

Reference is now made to FIG. 3, which is a schematic depicting an example environment in which the device (e.g., AP 206A-B), system (e.g., system 200 described with reference to FIG. 2), and/or method (e.g., described with reference to FIG. 1) described herein may be practiced, in accordance with some embodiments of the present invention. APs 306 (e.g., as described with reference to APs 206A-B of FIG. 2) are located adjacent to a road 304 to provide network services to mobile device 302 (e.g., as described with reference to mobile device 202 of FIG. 2) located within a vehicle (e.g., car shown for example purposes) driving along road 304. Mobile device 302 is moving in the driving direction represented by arrow 308. A first group of directional antennas 310A (e.g., as described with reference to antenna(s) 210) is arranged to face towards mobile device 302, opposite driving direction 308 (e.g., the number represented by *N*, for example, 1, 2, 3, 4, or other values). A second group of directional antennas 310B (e.g., as described with reference to antenna(s) 210) is arranged to face away from mobile device 302, along the driving direction 308 (e.g., the number represented by *M*, for example, 1, 2, 3, 4, or other values).

Referring now back to FIG. 1, the acts of the method may be implemented by computing unit 212 implemented within network management server 250 and/or access point(s) 206A and/or 206B, based on code instructions stored in memory 216 executed by processing unit 214. For clarity, the acts of the method are described in relation to components of system 200 of FIG. 2.

At 102, AP 206A and/or 206B (or other nearby APs not shown in FIG. 2) determine signal reception data related to mobile device 202.

Optionally, the mobile device is registered (i.e., being provided communication services by) to a different AP than the AP that is determining the signal reception data. In such a case, the AP that is determining the signal reception data may be the AP to which the mobile device will be handed over to. Alternatively or additionally, the mobile device is currently registered with the AP that is determining the signal reception data. In such a case the AP that is determining the signal reception data may be the AP that will be handing over the mobile device.

Optionally, the signal reception data is a RSSI identified by one of the APs and related to the mobile device.

The signal reception data, optionally RSSI, is calculated for signals (e.g., packet, which may carry data and/or voice such as in a VoIP application) transmitted from the mobile device and received by the AP.

The signal reception data may be calculated based on signals that are transmitted by the mobile device as part of a data application which is not designed to comply with the handover process, for example, a web navigator application, a VoIP application, an email application, a short message service application, a chat application, or another data transmitting application installed on the mobile device. The signals (e.g., packets) associated with the application(s) may be analyzed to calculate the signal reception data along the transmission pathway into the network. In such an implementation, the mobile device does not necessarily require to conform to a defined protocol, and/or to execute special software. Alternatively or additionally the signal reception data may be calculated based on predefined signals transmitted by the mobile device, for example, predefined packets (e.g., of a predefined size and/or containing predefined data) transmitted at predefined time intervals and/or using a predefined power setting. The predefined signals may be transmitted according to a predefined handover protocol and/or according to code installed on mobile device.

The signal reception data may be centrally calculated by network management server 250 for multiple APs 206A-B, and/or at each respective AP 206A-B.

At 104, a direction indicator is calculated based on the signal reception data. The direction indicator defines a measurement for identifying the time at which the mobile device moves past the AP (e.g., when the car containing the mobile device drives past a pole on which the AP is installed, when the mobile device is located the closest distance to the AP). The direction indicator defines the time when the mobile device moves from facing one set of directional antennas (i.e., the antennas facing opposite the direction of motion of the mobile device, e.g., the direction of traffic) to the other set of directional antennas (i.e., the antennas facing the direction of motion of the mobile device).

The time at which the mobile device moves from facing towards the first set of antennas to facing away from the second set of antennas (i.e., when the mobile device is located the closest distance to the AP) is termed herein the *crossover time.*

The direction indicated is calculated according to reading (e.g., signal reception data, and/or RSSI) of the first and the second groups of directional antennas of the AP. As discussed herein, the first group and the second group of directional antennas are facing in opposite directions.

Optionally, the direction indicator is calculated for the AP which is currently providing wireless communication services to the mobile device (i.e., the AP which will be handing over the mobile device to the next AP). Alternatively or additionally, the direction indicator is calculated for the AP which is expected to receive the handed over mobile device (i.e., the AP which will provide wireless services after the handover).

The direction indicator may be calculated, for example, at the AP by the processing unit executing code instructions stored in the memory, and/or by the network management server that receives the signal reception data from the AP.

An exemplary method is now described for calculating the direction indicator and the associated crossover time: The mobile device number is denoted by $i$. The AP antenna number is denoted by $j$. The packet number (packets transmitted by client $i$) is denoted by $k$. The group of $M$ directional antennas of the AP directed to the traffic direction is denoted by $\Re$. The group of $N$ directional antenna facing the opposite direction is denoted by $\mathcal{L}$. The received power (in milliwatts (mW)) of packet $k$ from client $i$ at receive antenna $j$ is denoted by P($i$, j, k).

The direction indicator ($i$) is denoted as: $DI(i) = DI_R(i) - DI_L(i),$ where:

$$DI_R(i) = 10\log\left(\frac{1}{M}\sum_{i\in\Re}\sum_k P(i,j,k)\right),$$

and

$$DI_L(i) = 10\log\left(\frac{1}{N}\sum_{i\in\mathcal{L}}\sum_k P(i,j,k)\right)$$

At 106, an access point mapping dataset (e.g., dataset 218A) indicative of geographical distances between the APs is accessed by network management server 250 and/or APs 206A and/or 206B. Dataset 218A stores distances measured, for example, in meters. Dataset 218A may be implemented, for example, as a database, as a look-up table, as a set of records, as text values (e.g., stored as comma separated values), or other implementations.

Dataset 218A is accessed to obtain the geographical distance between the current AP providing service to the mobile device, and the next AP which will be providing service to the mobile device after the handover. The next AP may be determined as the next AP along the road in the direction of motion of the mobile device.

At 108, a crossover time in which the mobile device crosses over one of the APs is calculated by analyzing the signal reception data, optionally based on the DI which is calculated as described with reference to 106. The crossover time may be calculated centrally by network management server 250 for each mobile device being serviced by the wireless network, and/or by respective APs.

The crossover time is represented by the time at which DI changes sign (or is about zero). The DI may be continuously calculated (e.g., based on received packets from the mobile device), calculated at predefined intervals (e.g., once every second, or every 0.1 second, or other times), and/or calculated based on events (e.g., when packets are received, and/or significant changes in RSSI, or other events). When the DI changes sign, the *crossover time* may be determined, for example, by accessing a real-time clock (e.g., a time server accessed using a network connection), accessing a locally stored time (e.g., stored in network management server 250 and/or at each AP 206A-B), and/or setting the *crossover time* as a reference time (e.g., zero) relative to which the *handover time* is calculated.

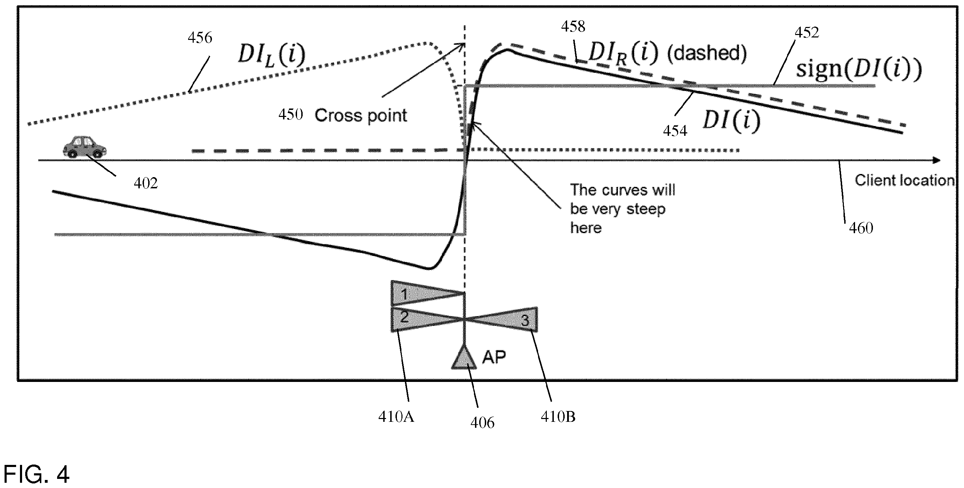

Reference is now made to FIG. 4, which is a schematic diagram including graphs representing values used in calculating the directional indication, in accordance with some embodiments of the present invention. FIG. 4 depicts values associated with the directional indicator (calculated using the equations above) as a function of position of mobile device 402 (shown within a driving car along axis 460) relative to AP 406 that includes a first group of antennas 410A facing opposite the direction of motion of mobile device 402 $(\mathcal{L}=\{1,2\}),$ and a second group of antennas 410B facing towards the direction of motion of mobile device 402 $(\mathfrak{R}=\{3\}),$ as described herein.

Cross over point 450 is identified according to a change in sign (e.g., from negative to positive) of the direction indicator (line 452 denotes the positive or negative sign state of the direction indicator. The value of the direction indicator as a function of position of mobile device 402 is represented by line 454. The value of the direction indicator is calculated from the value of $DI_L(i)$ represented by line 456 (shown as a function of positive of mobile device 402) and from the value of $DI_R(i)$ represented by line 458 (shown as a function of positive of mobile device 402).

Referring now back to FIG. 1, at 110, network management server 250 (or each respective AP, or another computing unit) estimates the velocity of the mobile device. In the case in which each respective AP estimates the velocity of the mobile device, data may be transmitted from one AP to the other (for use in calculation of the velocity, as described below), for example, via network 204, via network management server 250, via wireless signals between APs, or other methods.

The velocity is estimated as a function of the signal reception data. The velocity is estimated, in particular based on the determined crossover time (as described with reference to block 108) and a geographical distance between two of the APs retrieved from the access point mapping dataset 218A (as described with reference to block 106).

The estimation of the velocity is used to estimate the time from the determined crossover time to the handover time, represented herein as $\hat{T}$, as described with reference to block 112.

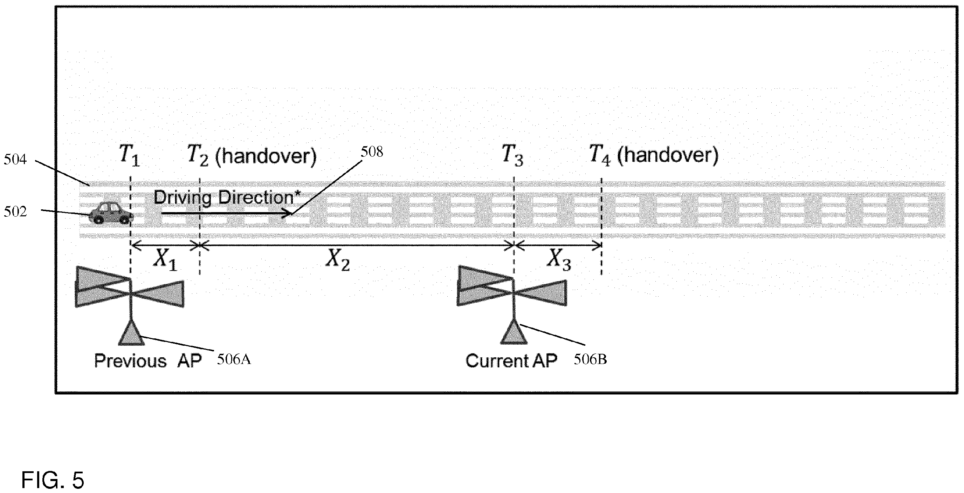

Reference is now made to FIG. 5, which is a schematic depicting a mobile device 502 (shown within a car driving along a road 504 in a driving direction shown by arrow 508) in the process of being handed between a previous AP 506A and a current AP 506B, in accordance with some embodiments of the present invention.

Crossover time $T_3$ is estimated for current AP 508B (as described herein). The handover time from current AP 508B to the next AP (not shown) is estimated as $T_4 = T_3 + \hat{T}$. The value of $\hat{T}$ is estimated from an estimate of the velocity of mobile device 502 (represented as $\hat{V}$) according to the relationship:

$$\hat{T} = \frac{X_3}{\hat{V}}$$

The value of $X_3$, which represents the distance from the current AP where the mobile device is to be handed off to the next AP, may be determined, for example, based on predefined value according to system requirements, from AP mapping dataset 218A, and/or based on other methods.

Optionally, the velocity is estimated based on a difference between a past crossover time (represented as $T_1$ in FIG. 5) during which the mobile device (e.g., 502) cross passed one of the APs (represented as previous AP 506A in FIG. 5) and the current crossover time (represented as $T_3$ in FIG. 5) during which the mobile device (e.g., 502) crosses the current AP (e.g., 506B). The velocity of the mobile device may be estimated based on the relationship (with reference to FIG. 5):

$$\hat{V} = \frac{X}{T_3 - T_1}$$

Where X denotes the distance between AP 508A and AP 508B, which may be calculated as $X_1 + X_2$, and/or obtained from AP mapping dataset 218A. The value of crossover time $T_1$ and crossover time $T_3$ are determined for respective APs, for example, as described herein with reference to block 108. The velocity is assumed to be approximately constant (i.e., the velocity does not vary significantly enough to affect the estimation of the handover time, for example, within a tolerance requirement).

Alternatively or additionally, the velocity of the mobile device $\hat{V}$ is estimated based on a difference between a past handover time (represented as $T_2$ in FIG. 5) during which service given to the mobile device by one of the APs was exchanged by a similar service given to the mobile device by another of the APs, and the calculated crossover time (represented as $T3$ in FIG. 5). The velocity of the mobile device may be estimated based on the relationship (with reference to FIG. 5):

$$\hat{V} = \frac{X_2}{T_3 - T_2}$$

$X_2$ may be calculated based on the difference between the previous handover location and the location of the current AP 506B, for example, based on AP mapping dataset 218A, and/or based on predefined system values.

Alternatively or additionally, the velocity is estimated based on a weighted function that takes into account a past velocity of the mobile device and/or an average velocity calculated for other mobile devices moving (e.g., along a road passing) between a first of the APs which currently gives service to the mobile device and a second of the APs which is designated to give service to the mobile device instead of the first AP after the handover. The weighted average function and/or the average velocity calculated for other mobile devices may be used in cases where the velocity of the mobile device varies, for example, due to traffic (or other reasons). The weighted average function and/or average velocity calculate for other mobile devices may improve the accuracy of estimating when the mobile device will reach the handover point, such as when the velocity before and after the crossover point are significantly different (i.e., that assuming a constant velocity will result in an error large enough that the determined handover point will result in a gap in wireless service).

Optionally, the velocity is estimated is calculated based on the time taken for the mobile device to pass a known distance (e.g., retrieved from AP mapping dataset 218A) between a third AP and the first AP, where the third AP is located in the direction of motion of the mobile device (e.g., down the road) after the second AP.

The average velocity of moving mobile devices that were previously handed off may be compared between the first and second APs, to the average velocity of the moving mobile devices between the second and third APs.

An exemplary method of calculating the velocity for the moving mobile device by considering the past velocity of other moving mobile devices is now presented:

X denotes the distance between the previous AP (e.g., 506A of FIG. 5) and the current AP (e.g. 506B of FIG. 5).
$X'$ denotes the distance between the current AP and the next AP.
$T(i)$ denotes the time it took previous mobile device $i$ to travel between previous AP to current AP.
$T'(i)$ denotes the time it took previous mobile device $i$ to travel between current AP to next AP.
$\hat{V}(j)$ denotes estimated velocity of the current mobile device between the current crossover geographical location and the handover geographical location.
$\hat{V}(j)$ may be calculated using the relationship:

$$\hat{V}(j) = f(X, X', T(1), ..., T(j), T'(1), ..., T'(j - K))$$

$f$ denotes some function and $K$ denotes some positive integer.

An exemplary function $f$ used to calculate $\hat{V}(j)$:

$$\hat{V}(j) = \alpha \frac{X}{T(j)} + (1 - \alpha) \frac{1}{100} \sum_{l=j-150}^{j-51} \frac{X'}{T'(l)}, \qquad \text{for } 0 < \alpha < 1.$$

The above relationship to estimates the velocity of the mobile device in the geographical distance between the current AP and the next AP as a weighted average between the speed of the mobile device in the geographical distance between the previous AP and the current AP, and the velocity of the other mobile devices that moved in the geographical distance between the current AP and the next AP.

For the other mobile devices in the geographical distance between the current AP and the next AP, the last 50 mobile devices (or other number of mobile devices) may be excluded, based on the assumption that the last 50 mobile devices did not yet reach the next AP, and therefore their velocity is still unknown (for example, due to a traffic jam). For the other mobile devices, the most recent mobile devices may be considered to try and obtain an accurate picture of the current traffic state, since traffic conditions may vary significantly over time.

At 112, a handover time (represented as $T_4$ with reference to FIG. 5) from one of the APs to another of the APs is determined. The handover time is a future handover time during which a service given to the mobile device by one of the APs is exchanged by a similar service given to the mobile device by another of the APs. Handing service over at the determined handover time maintains continuity of the wireless service to the moving mobile device, without data transfer gaps or disruptions.

The handover time is determined based on the determined crossover time (represented as $T_3$ with reference to FIG. 5), the velocity of the mobile device represented as $\hat{V}$ (e.g., determined as described with reference to block 110), and a second geographical distance represented as $X_3$ (e.g., retrieved from the access point mapping dataset 218A).

The handover time $T4$ is estimated from the relationship $T_4 = T_3 + \hat{T}$, where the value of $\hat{T}$ is estimated according to the relationship:

$$\hat{T} = \frac{X_3}{\hat{V}}$$

Optionally, the handover time is determined to occur during an overlap region in which service provided by the current AP (which is currently providing the service) and the next AP (which is expected to take over the service) overlap. The mobile device may be estimated to remain within the overlap region for less than about one second, or less than about 2 seconds, or less than about 0.7 seconds, or other values. The overlap region may be relatively small (e.g., due to the short range service capabilities based on the protocol defining the wireless service) and/or the mobile device may be moving quickly enough (e.g., on an highway, or train) relative to the overlap region such that ht mobile device spends a short period of time within the overlap region.

At 114, when the determined handover time arrives (e.g., by comparison to a real-time clock, or a stop-watch), the current AP providing service to the mobile device is instructed to initiate a handover process to the next AP to provide wireless service to the mobile device. The triggering of the handover process may be performed by the AP itself, and/or based on instructions received from the network management server.

At 116, blocks 102-114 are repeated sequentially based on each AP the mobile devices passes, for example, as the car in which the mobile device is located within drives along the road, sequentially passing AP. In this manner, each AP hands over the mobile device to the next AP, providing continuous wireless services to the mobile device.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant access points, mobile devices, and wireless communication services will be developed and the scope of the terms access point, mobile device, and wireless service is intended to include all such new technologies a priori.

As used herein the term "about" refers to ± 10 %.

The terms "comprises", "comprising", "includes", "including", "having" and their conjugates mean "including but not limited to". This term encompasses the terms "consisting of' and "consisting essentially of'.

The phrase "consisting essentially of' means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

**Claims**

1. A device for managing access point connections, wherein the device is configured to:

    determine (102) signal reception data related to a mobile device (202) registered to at least one of a plurality of access points, AP, whereby said signal reception data is a received Signal Strength Indicator, RSSI, identified by one of said plurality of APs (506A, 506B) and related to said mobile device (202);
    access (106) an access point mapping dataset indicative of geographical distances between said plurality of APs;
    calculate (108) a crossover time (450), in which the mobile device crosses over one of said plurality of APs (306), by analyzing the signal reception data,
    wherein a direction indicator, DI, is calculated based on a difference between signal reception data from a first (310A) and a second (310B) group of directional antennas of the one of said plurality of APs, wherein the directional antennas of said first group and the directional antennas of said second group are facing opposite directions; and
    wherein the crossover time is determined by the time, at which the DI changes sign, which is indicative for the mobile device moving from facing towards the first set of antennas to facing away from the second set of antennas,
    estimate (110) a velocity of the mobile device (202) as a function of the signal reception data, in particular based on a difference between a past crossover time (T1) and a current crossover time (T3) and a first geographical distance (X1+X2) between a respective previous (506A) and current (506B) of said plurality of APs obtained from the access point mapping dataset (218A); and
    determine (112) a handover time (T4) from a current (506B) of the plurality of APs to a following of the plurality of APs based on the current crossover time (T3), the velocity of the mobile device and a second geographical distance (X3) to an overlap region with the next AP from the access point mapping dataset.

2. The device of any of the previous claims, wherein said plurality of APs are geographically distributed along at least one road.

3. The device of any of the previous claims, further configured to receive a past handover time during which a service given to said mobile device by one of said plurality of APs was exchanged by a similar service given to said mobile device by another of said plurality of APs;
    wherein said velocity is estimated based on a difference between said past handover time and said crossover time.

4. The device of any of the previous claims, wherein said velocity is estimated based on a weighted function that takes into account a past velocity of said mobile device and an average velocity calculated for a plurality of mobile devices moving in a road passing between a first of said plurality of APs which currently gives service to said mobile device and a second of said plurality of APs which designated to give service to said mobile device instead of said first AP.

5. The device of claim 4, wherein said velocity is estimated based on the time taken to said mobile device to pass a known distance between a third AP and said first AP.

6. The device of any of the previous claims, wherein said handover time is a future handover time during which a service given to said mobile device by one of said plurality of APs is exchanged by a similar service given to said mobile device by another of said plurality of APs.

7. The device of any of the previous claims, wherein said plurality of APs provide service for mobile clients by wireless signals having frequencies clustered around 2.4 gigahertz, GHz, and/or 5 GHz.

8. The device of any of the previous claims, wherein the plurality of APs provide a Wi-Fi based service to the mobile device.

9. The device of any of the previous claims, wherein the handover time is determined to occur during an overlap region in which service provided by the one of the plurality of APs and the another of the plurality of APs overlap, and wherein the mobile device is estimated to remain within the overlap region for less than about one second.

10. The device of any one of the previous claims, wherein the geographical distance between any two of the plurality of APs is less than 1000 meters.

11. A method for managing access point connections, comprising:

determining (102) signal reception data related to a mobile device registered to at least one of a plurality of access points, AP whereby said signal reception data is a received Signal Strength Indicator, RSSI, identified by one of said plurality of APs 506A,506B) and related to said mobile device (202);
accessing (106) an access point mapping dataset indicative of geographical distances between said plurality of APs;
calculating (108) a crossover time (450), in which the mobile device (202) crosses over one of said plurality of APs (306), by analyzing the signal reception data,
wherein a direction indicator, DI, is calculated based on a difference between signal reception data from a first (310A) and second (310B) group of directional antennas of the one of said plurality of APs, wherein the directional antennas of said first group and the directional antennas of said second group are facing opposite directions; and wherein the crossover time is determined by the time, at which the DI changes sign, which is indicative for the mobile device moving from facing towards the first set of antennas to facing away from the second set of antennas;
estimating (110) a velocity of the mobile device as a function of the signal reception data, in particular based on a difference between a past crossover time (T1) and a current crossover time (T3) and a first geographical distance (X1+X2) between a respective previous (506A) and current (506B) of said plurality of APs obtained from the access point mapping dataset; and
determining (112) a handover time from a current (506B) of the plurality of APs to a following of the plurality of APs based on the current crossover time (T3), the velocity of the mobile device and a second geographical distance (X3) to an overlap region with the next AP determined from the access point mapping dataset.

**Patentansprüche**

1. Vorrichtung zur Verwaltung von Zugangspunktverbindungen, wobei die Vorrichtung konfiguriert ist, um:

Signalempfangsdaten zu bestimmen (102), die sich auf ein Mobilgerät (202) beziehen, das an mindestens einem einer Vielzahl von Zugangspunkten (Access Points, APs) registriert ist, wobei es sich bei den Signalempfangsdaten um einen Empfangssignalstärkeindikator (Received Signal Strength Indicator, RSSI) handelt, der durch einen der Vielzahl von APs (506A, 506B) identifiziert wird und sich auf das Mobilgerät (202) bezieht;
auf einen Zugangspunkt-Zuordnungsdatensatz zuzugreifen (106), der geografische Entfernungen zwischen der Vielzahl von APs angibt;
eine Überquerungszeit (450), in der das Mobilgerät einen der Vielzahl von APs (306) überquert, durch Analysieren der Signalempfangsdaten zu berechnen (108),
wobei ein Richtungsanzeiger (Direction Indicator, DI) basierend auf einer Differenz zwischen den Signalempfangsdaten von einer ersten (310A) und einer zweiten (310B) Gruppe von Richtantennen des einen der Vielzahl von APs berechnet wird, wobei die Richtantennen der ersten Gruppe und die Richtantennen der zweiten Gruppe in entgegengesetzte Richtungen weisen; und

wobei die Überquerungszeit durch die Zeit bestimmt wird, zu der der DI sein Vorzeichen ändert, wodurch angegeben wird, dass das Mobilgerät sich von einer dem ersten Satz von Antennen zugewandten Richtung in eine dem zweiten Satz von Antennen abgewandte Richtung bewegt,

eine Geschwindigkeit des Mobilgeräts (202) als eine Funktion der Signalempfangsdaten zu schätzen (110), insbesondere basierend auf einer Differenz zwischen einer früheren Überquerungszeit (T1) und einer aktuellen Überquerungszeit (T3) und einer ersten geografischen Entfernung (X1+X2) zwischen einem jeweiligen vorherigen (506A) und aktuellen (506B) der Vielzahl von APs, die von dem Zugangspunkt-Zuordnungsdatensatz (218A) erhalten werden; und

eine Übergabezeit (T4) von einem aktuellen (506B) der Vielzahl von APs zu einem folgenden der Vielzahl von APs basierend auf der aktuellen Überquerungszeit (T3), der Geschwindigkeit des Mobilgeräts und einer zweiten geografischen Entfernung (X3) zu einem Überlappungsbereich mit dem nächsten AP aus dem Zugangspunkt-Zuordnungsdatensatz zu bestimmen (112).

2. Vorrichtung nach einem der vorhergehenden Ansprüche, wobei die Vielzahl von APs geografisch entlang mindestens einer Straße verteilt sind.

3. Vorrichtung nach einem der vorhergehenden Ansprüche, die ferner konfiguriert ist, um eine frühere Übergabezeit zu empfangen, während der ein Dienst, der dem Mobilgerät von einem der Vielzahl von APs erbracht wird, durch einen ähnlichen Dienst ausgetauscht wurde, der dem Mobilgerät durch einen anderen der Vielzahl von APs erbracht wird;

wobei die Geschwindigkeit basierend auf einer Differenz zwischen der früheren Übergabezeit und der Überquerungszeit geschätzt wird.

4. Vorrichtung nach einem der vorhergehenden Ansprüche, wobei die Geschwindigkeit basierend auf einer gewichteten Funktion geschätzt wird, die eine frühere Geschwindigkeit des Mobilgeräts und eine durchschnittliche Geschwindigkeit berücksichtigt, die für eine Vielzahl von Mobilgeräten berechnet wird, die sich auf einer Straße bewegen, die zwischen einem ersten der Vielzahl von APs, der aktuell einen Dienst für das Mobilgerät erbringt, und einem zweiten der Vielzahl von APs, der dazu vorgesehen ist, einen Dienst für das Mobilgerät anstelle des ersten AP zu erbringen, verläuft.

5. Vorrichtung nach Anspruch 4, wobei die Geschwindigkeit basierend auf der Zeit geschätzt wird, die das Mobilgerät benötigt, um eine bekannte Entfernung zwischen einem dritten AP und dem ersten AP zurückzulegen.

6. Vorrichtung nach einem der vorhergehenden Ansprüche, wobei die Übergabezeit eine künftige Übergabezeit ist, während der ein Dienst, der dem Mobilgerät von einem der Vielzahl von APs erbracht wird, durch einen ähnlichen Dienst ausgetauscht wird, der dem Mobilgerät durch einen anderen der Vielzahl von APs erbracht wird.

7. Vorrichtung nach einem der vorhergehenden Ansprüche, wobei die Vielzahl von APs Dienste für mobile Clients mittels drahtloser Signale mit Frequenzen bereitstellt, die um 2,4 Gigahertz (GHz) und/oder 5 GHz gebündelt sind.

8. Vorrichtung nach einem der vorhergehenden Ansprüche, wobei die Vielzahl von APs einen WiFi-basierten Dienst für das Mobilgerät bereitstellen.

9. Vorrichtung nach einem der vorhergehenden Ansprüche, wobei bestimmt wird, dass die Übergabezeit in einem Überlappungsbereich auftritt, in dem der von dem einen der Vielzahl von APs und dem anderen der Vielzahl von APs bereitgestellte Dienst sich überschneiden, und wobei geschätzt wird, dass das Mobilgerät für weniger als etwa eine Sekunde innerhalb des Überlappungsbereichs bleibt.

10. Vorrichtung nach einem der vorhergehenden Ansprüche, wobei die geografische Entfernung zwischen zwei beliebigen der Vielzahl von APs weniger als 1000 Meter beträgt.

11. Verfahren zur Verwaltung von Zugangspunktverbindungen, umfassend:

Bestimmen (102) von Signalempfangsdaten, die sich auf ein Mobilgerät beziehen, das an mindestens einem einer Vielzahl von Zugangspunkten (Access Points, APs) registriert ist, wobei es sich bei den Signalempfangsdaten um einen Empfangssignalstärkeindikator (Received Signal Strength Indicator, RSSI) handelt, der durch einen der Vielzahl von APs (506A, 506B) identifiziert wird und sich auf das Mobilgerät (202) bezieht;
Zugreifen (106) auf einen Zugangspunkt-Zuordnungsdatensatz, der geografische Entfernungen zwischen der Vielzahl von APs angibt;

Berechnen (108) einer Überquerungszeit (450), in der das Mobilgerät (202) einen der Vielzahl von APs (306) überquert, durch Analysieren der Signalempfangsdaten,

wobei ein Richtungsanzeiger (Direction Indicator, DI) basierend auf einer Differenz zwischen den Signalempfangsdaten von einer ersten (310A) und zweiten (310B) Gruppe von Richtantennen des einen der Vielzahl von APs berechnet wird, wobei die Richtantennen der ersten Gruppe und die Richtantennen der zweiten Gruppe in entgegengesetzte Richtungen weisen; und

wobei die Überquerungszeit durch die Zeit bestimmt wird, zu der der DI sein Vorzeichen ändert, wodurch angegeben wird, dass das Mobilgerät sich von einer dem ersten Satz von Antennen zugewandten Richtung in eine dem zweiten Satz von Antennen abgewandte Richtung bewegt;

Schätzen (110) einer Geschwindigkeit des Mobilgeräts als eine Funktion der Signalempfangsdaten, insbesondere basierend auf einer Differenz zwischen einer früheren Überquerungszeit (T1) und einer aktuellen Überquerungszeit (T3) und einer ersten geografischen Entfernung (X1+X2) zwischen einem jeweiligen vorherigen (506A) und aktuellen (506B) der Vielzahl von APs, die von dem Zugangspunkt-Zuordnungsdatensatz erhalten werden; und

Bestimmen (112) einer Übergabezeit von einem aktuellen (506B) der Vielzahl von APs zu einem folgenden der Vielzahl von APs basierend auf der aktuellen Überquerungszeit (T3), der Geschwindigkeit des Mobilgeräts und einer zweiten geografischen Entfernung (X3) zu einem Überlappungsbereich mit dem nächsten aus dem Zugangspunkt-Zuordnungsdatensatz bestimmten AP.

**Revendications**

1. Dispositif pour gérer des connexions de point d'accès, dans lequel le dispositif est configuré :

pour déterminer (102) des données de réception de signal se rapportant à un dispositif mobile (202) enregistré à au moins un point d'accès d'une pluralité de points d'accès, AP, grâce à quoi lesdites données de réception de signal constituent un indicateur d'intensité de signal reçu, RSSI, identifié par un point d'accès de ladite pluralité de points d'accès (506A, 506B) et se rapportant audit dispositif mobile (202) ;

pour avoir accès (106) à un ensemble de données de mise en correspondance de points d'accès indiquant des distances géographiques entre ladite pluralité de points d'accès ;

pour calculer (108) un temps de transition (450), pendant lequel le dispositif mobile croise un point d'accès de ladite pluralité de points d'accès (306) en analysant les données de réception du signal,

dans lequel un indicateur de direction, DI, est calculé en se basant sur une différence entre des données de réception de signal provenant d'un premier (310A) et d'un second (310B) groupe d'antennes directionnelles du point d'accès de ladite pluralité de points d'accès, dans lequel les antennes directionnelles dudit premier groupe et les antennes directionnelles dudit second groupe sont orientées dans des directions opposées ; et

dans lequel le temps de transition est déterminé par le moment où l'indicateur DI change de signe, ce qui indique que le dispositif mobile se déplace depuis une position où il est orienté vers le premier ensemble d'antennes, jusqu'à une position où il est opposé au second ensemble d'antennes,

pour estimer (110) une vitesse du dispositif mobile (202) en fonction des données de réception de signal, en particulier en se basant sur une différence entre un temps de transition passé (T1) et un temps de transition actuel (T3) et une première distance géographique (X1 + X2) entre un précédent (506A) et un actuel (506B) point d'accès respectif de ladite pluralité de points d'accès obtenus de l'ensemble de données de mise en correspondance de points d'accès (218A) ; et

pour déterminer (112) un temps de transfert (T4) à partir d'un point d'accès actuel (506B) de la pluralité de points d'accès jusqu'à un point d'accès suivant de la pluralité de points d'accès en se basant sur le temps de transition actuel (T3), la vitesse du dispositif mobile et une seconde distance géographique (X3) jusqu'à une région de chevauchement avec le prochain point d'accès à partir de l'ensemble de données de mise en correspondance de points d'accès.

2. Dispositif selon l'une quelconque des revendications précédentes, dans lequel ladite pluralité de points d'accès sont répartis géographiquement le long d'au moins une route.

3. Dispositif selon l'une quelconque des revendications précédentes, configuré en outre pour recevoir un temps de transfert passé pendant lequel un service offert audit dispositif mobile par un point d'accès de ladite pluralité de points d'accès a été échangé avec un service similaire offert audit dispositif mobile par un autre point d'accès de ladite pluralité de points d'accès ;

dans lequel ladite vitesse est estimée en se basant sur une différence entre ledit temps de transfert passé et ledit temps de transition.

4. Dispositif selon l'une quelconque des revendications précédentes, dans lequel ladite vitesse est estimée en se basant sur une fonction pondérée qui prend en compte une vitesse antérieure dudit dispositif mobile et une vitesse moyenne calculée pour une pluralité de dispositifs mobiles qui se déplacent sur une route passant entre un premier point d'accès de ladite pluralité de points d'accès, qui offre à présent un service audit dispositif mobile, et un deuxième point d'accès de ladite pluralité de points d'accès qui sont conçus pour offrir un service audit dispositif mobile à la place dudit premier point d'accès.

5. Dispositif selon la revendication 4, dans lequel ladite vitesse est estimée en se basant sur le temps pris par ledit dispositif mobile pour franchir une distance connue entre un troisième point d'accès et ledit premier point d'accès.

6. Dispositif selon l'une quelconque des revendications précédentes, dans lequel ledit temps de transfert est un temps de transfert futur pendant lequel un service offert audit dispositif mobile par un point d'accès de ladite pluralité de points d'accès est échangé avec un service similaire offert audit dispositif mobile par un autre point d'accès de ladite pluralité de points d'accès.

7. Dispositif selon l'une quelconque des revendications précédentes, dans lequel ladite pluralité de points d'accès fournissent un service pour des clients mobiles au moyen de signaux sans fil ayant des fréquences groupées autour de 2,4 gigahertz (GHz) et/ou de 5 GHz.

8. Dispositif selon l'une quelconque des revendications précédentes, dans lequel la pluralité de points d'accès fournissent un service Wi-Fi au dispositif mobile.

9. Dispositif selon l'une quelconque des revendications précédentes, dans lequel le temps de transfert est déterminé de sorte à produire pendant une région de chevauchement dans laquelle un service fourni par le point d'accès de la pluralité de points d'accès et par un autre point d'acccès de la pluralité de points d'accès se chevauchent, et dans lequel il est estimé que le dispositif mobile reste dans la région de chevauchement pendant une période de temps inférieure à environ une seconde.

10. Dispositif selon l'une quelconque des revendications précédentes, dans lequel la distance géographique entre deux points d'accès quelconques de la pluralité de points d'accès est inférieure à 1 000 mètres.

11. Procédé pour gérer des connexions de point d'accès, consistant :

à déterminer (102) des données de réception de signal se rapportant à un dispositif mobile enregistré à au moins un point d'accès d'une pluralité de points d'accès, AP, grâce à quoi lesdites données de réception de signal constituent un indicateur d'intensité de signal reçu, RSSI, identifié par un point d'accès de ladite pluralité de points d'accès (506A, 506B) et se rapportant audit dispositif mobile (202) ;
à avoir accès (106) à un ensemble de données de mise en correspondance de points d'accès indiquant des distances géographiques entre ladite pluralité de points d'accès ;
à calculer (108) un temps de transition (450), pendant lequel le dispositif mobile (202) croise un point d'accès de ladite pluralité de points d'accès (306) en analysant les données de réception du signal,
dans lequel un indicateur de direction, DI, est calculé en se basant sur une différence entre des données de réception de signal provenant d'un premier (310A) et d'un second (310B) groupe d'antennes directionnelles du point d'accès de ladite pluralité de points d'accès, dans lequel les antennes directionnelles dudit premier groupe et les antennes directionnelles dudit second groupe sont orientées dans des directions opposées ; et
dans lequel le temps de transition est déterminé par le moment où l'indicateur DI change de signe, ce qui indique que le dispositif mobile se déplace depuis une position où il est orienté vers le premier ensemble d'antennes, jusqu'à une position où il est opposé au second ensemble d'antennes,
à estimer (110) une vitesse du dispositif mobile en fonction des données de réception de signal, en particulier en se basant sur une différence entre un temps de transition passé (T1) et un temps de transition actuel (T3) et une première distance géographique (X1 + X2) entre un précédent (506A) et un actuel (506B) point d'accès respectif de ladite pluralité de points d'accès obtenus de l'ensemble de données de mise en correspondance de points d'accès ; et
à déterminer (112) un temps de transfert à partir d'un point d'accès actuel (506B) de la pluralité de points d'accès jusqu'à un point d'accès suivant de la pluralité de points d'accès en se basant sur le temps de transition actuel (T3), la vitesse du dispositif mobile et une seconde distance géographique (X3) jusqu'à une région de chevauchement avec le prochain point d'accès déterminé à partir de l'ensemble de données de mise en correspondance de points d'accès.

Determine signal reception
data of mobile device
102

↓

Calculate direction indicator
104

↓

Access dataset of
geographical distances
between access points
106

↓

Calculate crossover time for
mobile device
108

↓

Estimate velocity of mobile
device
110

↓

Determine handover time
112

↓

Automatically initiate handover
procedure according to
handover time
114

Iterate at
each access
point for the
moving
mobile device
116

# FIG. 1

FIG. 2

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2010090558 A1

• EP 2804414 A1

**Non-patent literature cited in the description**

• Real-time traffic, handoff, and outage modeling in high RF pico cells. **IVAN ALDAYA et al.** 2011 IEEE WIRELESS COMMUNICATIONS AND NETWORKING CONFERENCE (WCNC 2011). IEEE, 28 March 2011, 410-415